Europäisches Patentamt

European Patent Office

Office européen des brevets

(11) Publication number: **0 202 657 B1**

# EUROPEAN PATENT SPECIFICATION

(45) Date of publication of patent specification: **29.05.91**

(51) Int. Cl.⁵: **B01L 11/00, G01N 35/08, G01N 1/10**

(21) Application number: **86106855.9**

(22) Date of filing: **20.05.86**

(54) **Wash cup for a probe.**

(30) Priority: **21.05.85 US 736602**

(43) Date of publication of application:
**26.11.86 Bulletin 86/48**

(45) Publication of the grant of the patent:
**29.05.91 Bulletin 91/22**

(84) Designated Contracting States:
**BE CH DE FR GB IT LI NL SE**

(56) References cited:
**DE-A- 1 523 042**
**US-A- 3 252 327**
**US-A- 3 795 149**

**PATENT ABSTRACTS OF JAPAN, vol. 10, no. 67 (C-333)[2124], 15th March 1986 & JP-A-60 206 450 (KURIN CHEMICAL K.K.) 18-10-1985**

(73) Proprietor: **TECHNICON INSTRUMENTS COR-PORATION(a Delaware corporation)**
**511 Benedict Avenue**
**Tarrytown, New York 10591-6097(US)**

(72) Inventor: **Aoyagi, Keichi**
**1890 Lamberts Mill Road**
**Westfield New Jersey(US)**

(74) Representative: **Walter, Helmut, Dipl.-Ing.**
**Aubinger Strasse 81**
**W-8000 München 60(DE)**

## Description

The present invention relates to a wash cup for use in a random access, isolation fluid-based, analytical instrument. More particularly, the invention is directed to a wash cup for use with such instrument whereby a test sample as first liquid and fresh water as second liquid and isolation fluid, all of which being necessary for the operation of the instrument, can be introduced therein.

Prior art devices which are presently in use with systems such as that described above and suffer from an inherent disadvantage. The isolation fluid normally used in such devices is a fluorinated oil having a specific gravity significantly greater than water. Accordingly, segments of the fluid settle to the bottom of the sampling device or wash cup, and disrupt the water level regulating activity of the cup. The present invention completely overcomes this serious difficulty representative of the prior art.

The present invention relates to, and is directly usable in conjunction with, a random access, isolation fluid-based analytical instrument. In such systems, conduits are used, the inner walls of which are coated with immiscible liquid, such as a fluorinated oil. In use, the reagent to be utilized in a particular assay and/or the test sample to be assayed proceeds past one or more detection stations which, for example, can comprise a spectrophotometer or colorimeter, and discrete quantities of the test sample and/or reagents may be separated by air or other separating fluid. In order to avoid such inadvertent mixing of the discrete liquid samples, the walls of the conduit are coated with an immiscible liquid such as is described in the Smyth, et al., U.S. Patent No. 3,479,141, assigned to the instant asignee. The Smyth, et al. patent discloses a transport system for an automatic analysis apparatus in which a series of aqueous liquid samples are processed as a flowing fluid stream with substantially no contamination between the flowing liquid segments. A fluoropolymer conduit, such as TEFLON® polymer, and intersample carrier segments of silicone are employed. Smyth, et al. teach that the silicone encapsulates aqueous liquid segments, substantially completely eliminating the intermixing of successive liquid segments. Reagents are separately introduced on a continual basis, such as in conventional fashion as described with respect to previous continous-flow systems.

In Smythe, et al., U.S. Patent No. 4,253,846 also assigned to the instant assignee, selective injection of reagent into a moving stream of sample segments is provided to such a continous flow system, and allows for an increase in the efficiency and throughput of sample processing. Using injectors such as poppet valves, the reagent is introduced by piercing the immiscible liquid layer encapsulating the selected sample segments. The immiscible liquid layer reforms after injection to maintain sample integrity and prevent carryover to other samples in the system. Air and sample are alternately aspirated via a probe which periodically dips into a sample cup. The immiscible liquid is said to be introduced to the inlet end of the probe by an applicator (not shown) and aspirated along with air between successive sample immersions. The immiscible liquid can be a fluorocarbon and both the conduit wall and the poppet valve tip can be fluorinated polymer. This patent does not further address the actual mechanism of immiscible liquid introduction and clearly indicates that it is separate from the "on-line" introduction of reagent.

Diebler, et al., U.S. Patent No. 4,121,466, also assigned to the instant assignee, disclose a metering apparatus useful to either dispense or aspirate sample. The surface of the aspirating probe is coated with an immiscible liquid film which, in the preferred embodiment, is flowed continuously down the peripheral probe surface at a rate substantially equal to the aspiration rate, so as to be eventually aspirated into the probe inlet. During immersion, excess immiscible liquid on the peripheral probe surface floats onto the surface of the liquid being aspirated but a small film remains on the probe surface. Also, during aspiration, a thin film of immiscible liquid continously wets the interior probe surface. As the probe is withdrawn, the flow of immiscible liquid is commenced so as to be aspirated along the probe immediately upon withdrawal thereof from the liquid. Segments of the immiscible liquid and aspirated liquid are therefore successively passed along the probe system.

Smythe, et al., U.S. Patent No. 4,259,291, also assigned to the instant assignee, refers to the continous flow systems described in the above Smythe, et al '291 and Diebler, et al '466 patents and addresses the need for more precise and uniform application of protective immiscible liquid coatings. An applicator directly surrounds the probe and layers a thin uniform film of immiscible liquid on the outer surface thereof. The applicator is moved relative to the probe to coat its outer surface. An aspirating mechanism connected to the probe alternately aspirates controlled volumes of air and aqueous sample therethrough. Immiscible liquid is said to be drawn into the probe along with the air segments so aspirated. Thus, alternating sample and air segments encased within the immiscible liquid are passed along the probe to a rotary valve which transfers each aspirated aqueous sample in turn from the probe to a conduit for dispensing to an analytical system. As described herein, a pool of wiped immiscible liquid forms about the probe due to the interplay of surface forces of the liquid in combination with the wetting forces of the immiscible liquid with the respect to the probe surface. When the probe is withdrawn from the sample cup, this pool forms a small globule of immiscible liquid over the inlet of the probe, inasmuch as it preferentially wets the probe material to the substantial exclusion of the aqueous sample. This patent teaches that the globule of immiscible liquid is aspirated into the probe inlet along with an air segment. Reagent is introduced "downstream" in a manner which is not further described.

Each of the above patents has provided an advance of one sort or another in the elimination of successive sample intermixing and carryover. This end has been widely recognized as a major consideration in the improvement of of continous flow systems. The combined references provided a significant background literature on the technology available to prevent interaction of segments in continous flow analysis systems, and the disclosure of the references are hereby incorporated herein by reference thereto.

Other aspects of the state of the art which are pertinent to the present invention include two continous flow assay instruments currently marketed by the assignee herein, Technicon Instruments Corporation, namely the Simultaneous Multichannel Analyzer (SMA)® and the Simultaneous Multichanneled Analyzer with Computer (SMAC)®. Both of these instruments utilize a mechanized probe for transferring a test sample and the reagent liquids into the flowing stream. However, in order to minimize cross-contamination between successive samples, it is necessary to wash the probe. Accordingly, a washing cup is utilized with these instruments. Thus, the washing cup serves (a) to remove remnents of prior samples taken by the prove, i.e. (b) to clean the probe, (c) to inject successive aqueous samples into the flowing stream, (d) to assure a continous flow of fresh water through the cup, and (e) to assure that the liquid level remains relatively constant, thereby providing a relatively constant volume of fresh water for the instrument.

The present invention comprises a wash cup for the containment of a probe in the form of a first liquid and a second liquid, the first liquid being substantially immiscible with and of substantially higher specific gravity than the second liquid; the cup is provided with an inlet means for the second liquid and an outlet means serving to drain at least parts of first and second liquid out of the cup; the cup also comprises a liquid level control means within said cup which communicates with the cup substantially under the liquid surface and with the outlet means; additionally, the cup comprises a means located at the bottom of the cup and operable to permit passage of the first liquid from the cup directly to said outlet means to the substantially exclusion of the second liquid.

The cup of the present invention is for use with a random access, isolation fluid based analytical instrument.

The foregoing objects of the invention, and others, as well as the significant advances in the art represented by the present invention, are set forth in detail in the following description of the invention. The accompanying drawings are provided to further clarify various aspects of the present invention.

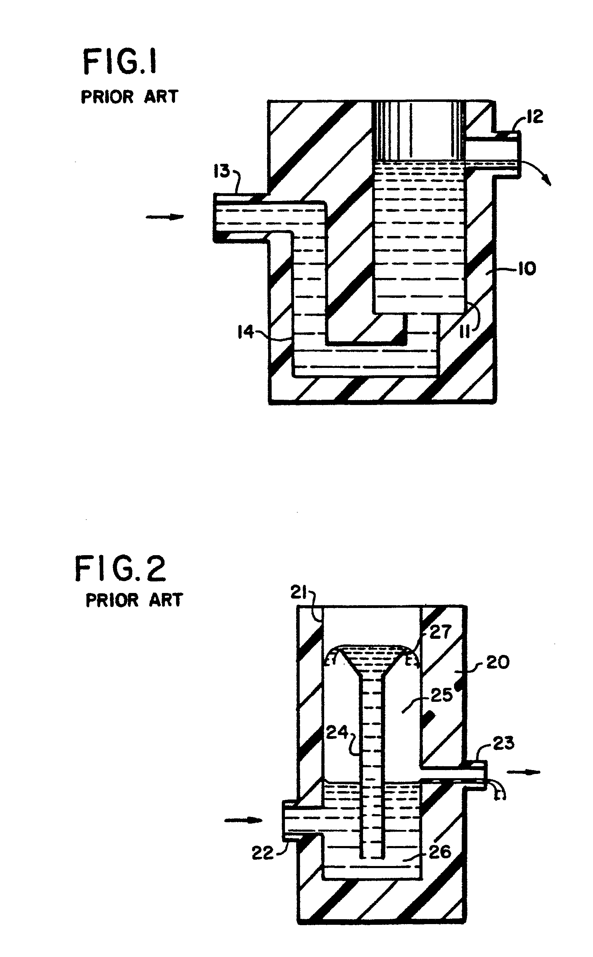

Accordingly, FIG. 1 depicts a prior art device used on the SMA analytical system, and is a cross-sectional view of the said device.

Similarly, FIG. 2 is a cross-sectional representation of a washing cup used with the SMAC analytical system mentioned above, and is a cross-sectional view thereof.

FIG. 3 is an isometric view of the present invention.

FIG. 4 is a cross-sectional view of the present invention along lines 4-4 in FIG.3.

Referring initially to FIGS. 1 and 2, washing cups are depicted for cleaning the sample injection probe of the SMA and SMAC systems, respectively, both of which are commercially available from the assignee herein, i.e., Technicon Instruments Corporation.

In FIG. 1, the washing cup 10 comprises a generally two body member 11 having an outlet 12 and inlet 13. Inlet 13 communicates with the body member 11 through conduit 14.

In operation in conjunction with the SMA analytical system, water enters inlet 13 and is permitted to flow through conduit 14, thereby filling body member 11 until it reaches a level at or near the bottom of outlet 12. Accordingly, water flows entirely through the washing cup thereby maintaining a relatively clean flow of water.

No provision is made, however, for use of such a cup with a random access, isolation fluid-based analytical instrument such as is described in the Smyth, et al. patents, mentioned supra.

Referring to FIG. 2, there is depicted a washing cup 20 which is used with the commercially available SMAC analytical system, marketed by the present assignee Technicon Instruments Corporation. Accordingly, washing cup 20 comprises a generally tubular body member 21 provided with inlet means 22 and an outlet means 23. Mounted within the body member 21 is an overflow means 24, which is mounted in such a way as to provide upper chamber 25 and lower chamber 26. Water which enters through inlet means 22 into lower chamber 26 travels up the overflow means 24 until it reaches lip 27, whereupon the water overflows into upper chamber 25 and leaves the apparatus through outlet means 23.

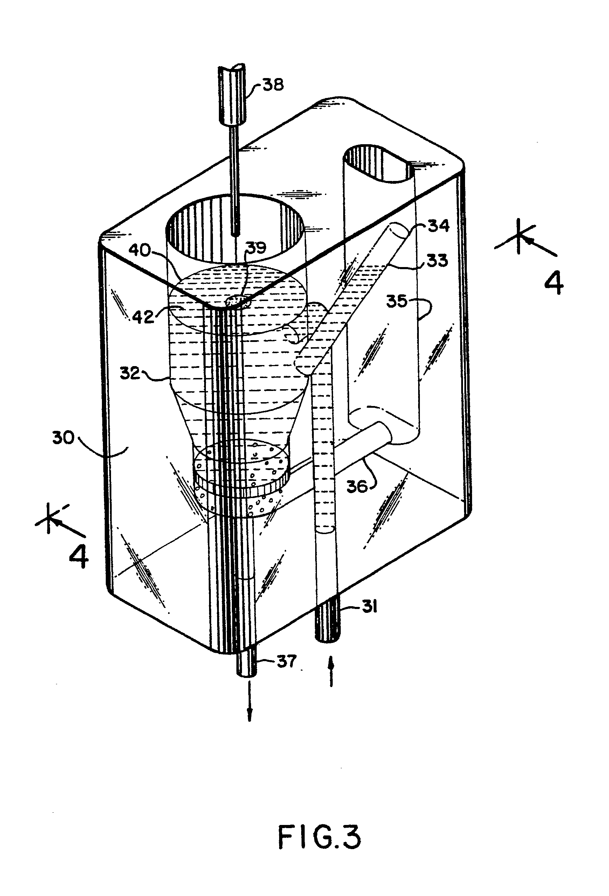

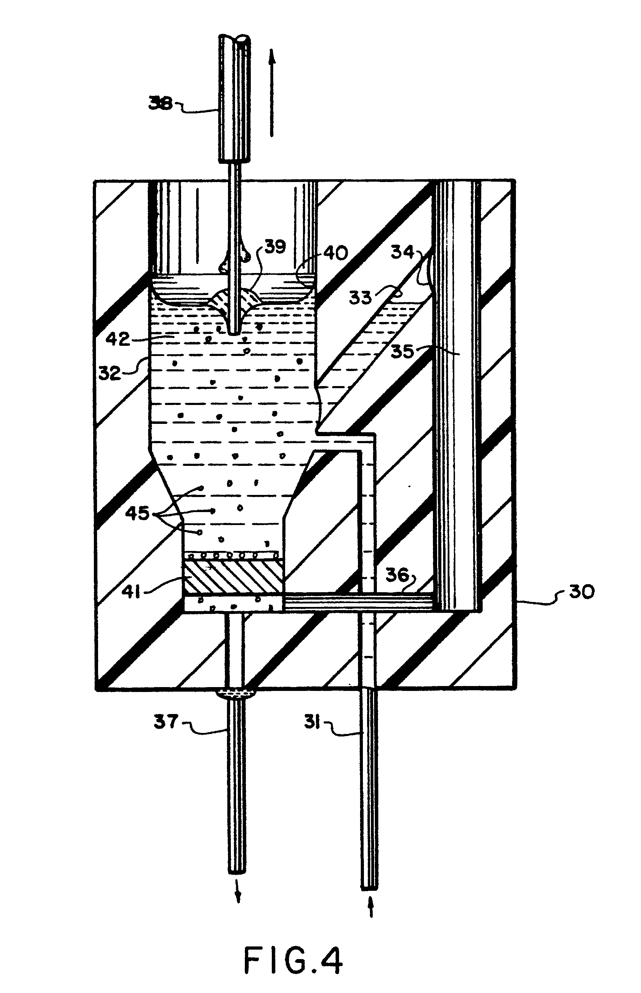

Turning now to the present invention, a preferred embodiment is depicted in FIGS. 3 and 4 which illustrate the preferred elements of the invention. Accordingly, FIG. 3 depicts an isometric view of a preferred cup in accordance with the present invention, and FIG. 4 is a cross-section of the cup along the lines 4-4 of FIG. 3.

In FIGS. 3 and 4, the body of the cup 30 is comprised of any suitable material such as a clear plastic similar to acrylic. The cup is formed through any suitable means such as molding, extrusion, machining, or combinations of such processes or other processes, all of which are known to those skilled in the art.

Accordingly, inlet means 31 communicates with the cup portion 32, and the second liquid 42 enters the cup therethrough. As the level of the second liquid rises in cup 32, it simultaneously rises in overflow communication means 33. Communication means 33, together with overflow chamber 35 comprise the liquid level control means in the preferred embodiment. As liquid enters the cup and rises to level 34, it overflows into the overflow chamber and exits through conduit 36 and outlet means 37.

The first liquid, which is immiscible with the second liquid is introduced into the cup via probe 38 which has been coated on its perimeter with the first liquid prior to its insertion into the cup 30. Upon immersion into the second liquid present in the cup, a small portion of the first liquid remains behind upon removel of the probe 38. Because of its immiscibility with the second liquid, the first liquid forms lens 39, and floats at the surface 40 of the second liquid present in the cup due to surface tension.

Where the first liquid is of substantially higher specific gravity than the second liquid, as the lens forms, it eventually reaches a critical mass whereupon the weight of the lens partially overcomes the surface tension of the second liquid 42. This permits small portions 43 of the first liquid to settle to the bottom of the cup leaving the lens in position at the surface of the second liquid.

In order to prevent the first liquid from accumulating to any appreciable extent in the cup, a means 41 is provided to permit the passage of the first liquid out of the cup eventually to leave the cup through outlet means 37. Ideally, the means 41 is porous poly (tetrafluoroethylene) known commercially as Teflon trademark of E. I. DuPont de Nemours of Wilmington, Delaware. Of course, it is understood that means 41 can be comprised of any suitable material which will permit the passage of the first liquid from cup 32 to outlet means 37 to the substantial exclusion of the second liquid such as a porous halogenated hydrocarbon polymer. In the preferred embodiment, means 41 is a porous Teflon plug having a pore size of from about 5 to 15 microns. Especially preferred in a Teflon plug having a pore size in the range of about 5 to 15 microns.

## Claims

1. A wash cup for the containment of a probe in the form of a first liquid and a second liquid, the first liquid being substantially immiscible and of substantially higher specific gravity than the second liquid, said cup being provided with an inlet means (31) for the second liquid and an outlet means (37 serving to drain at least portions of first and second liquid out of the cup, characterised in that the cup additionally comprises:
   a liquid level control means for controlling the liquid level within said cup, (32) said liquid level control means (33,35) communicating with the cup substantially under the liquid surface and with said outlet means, (37) and
   means (41) located at the bottom of the cup and operable to permit the passage of said first liquid from said cup (32 ) directly to said outlet means (37) to the substantial exclusion of said second liquid.

2. The cup of claim 1 in which said liquid level control means (33, 35) comprises a spillway means (33) communicating with said cup (32) whereby the liquid level in said cup (32) is determined by the height of said spillway.

3. The cup of claims 1 or 2 in which means operable to permit the passage of said first liquid is a porous, fluid-selective filter means (41) positioned between said cup (30) and said outlet means (37) said filter means being capable of permitting passage of said first liquid therethrough, to the substantial exclusion of the second liquid.

4. The cup of claims 1, 2 or 3 in which said filter means (41) comprises a porous halogenated hydrocarbon polymer.

5. The cup of claims 1, 2 or 3 in which said filter means (41) comprises porous poly-(tetrafluoroethylene).

6. The cup of claims 4 or 5 in which the pore size of said filter means (41) is from about 5 to 15 microns.

7. The cup of any one of the preceding claims in which said liquid level control means comprises an overflow communication means (33) communicating with said cup (32), and an overflow chamber (35) for maintaining the level of liquid in the cup at a predetermined height or level determined by the height of said overflow communication means (33).

8. The cup of claims 5 or 6 in which filter means (41) comprises a porous poly-(tetrafluoroethylene) plug.

9. The cup of any one of the preceding claims in which the body (30) of the cup is a clear plastic such as acrylic.

## Revendications

1. Gobelet de lavage, destiné à contenir une sonde sous la forme d'un premier liquide et un second liquide, le premier liquide étant sensiblement non-miscible au, et de densité sensiblement supérieure à celle du, second liquide, ledit gobelet étant doté d'un moyen d'entrée (31) pour le second liquide et d'un moyen de sortie (37) servant à évacuer au moins des fractions de premier et de second liquide hors du gobelet, caractérisé par le fait que le gobelet comprend en outre :
   - un moyen de contrôle du niveau de liquide, pour contrôler le niveau de liquide à l'intérieur dudit gobelet (32), ledit moyen (33, 35) de contrôle du niveau de liquide communiquant avec le gobelet essentiellement au-dessous de la surface de liquide et avec ledit moyen de sortie (37) ; et
   - un moyen (41) disposé au fond du gobelet et actionnable pour permettre le passage dudit premier liquide à partir dudit gobelet (32) directement dans ledit moyen de sortie (37), à l'exclusion substantielle dudit second liquide.

2. Gobelet selon la revendication 1, dans lequel ledit moyen (33, 35) de contrôle du niveau de liquide comprend un moyen de déversoir (33) communiquant avec ledit gobelet (32), ce par quoi le niveau de liquide dans ledit gobelet (32) est déterminé par la hauteur dudit déversoir.

3. Gobelet selon l'une des revendications 1 ou 2, dans lequel les moyens actionnables pour permettre le passage dudit premier liquide est un moyen (41) de filtre poreux, sélectif vis-à-vis des fluides, positionné entre ledit gobelet (30) et ledit moyen de sortie (37), ledit moyen de filtre étant capable de permettre le passage dudit premier liquide à travers lui, à l'exclusion substantielle du second liquide.

4. Gobelet selon l'une des revendications 1, 2 ou 3, dans lequel ledit moyen de filtre (41) comprend un polymère poreux d'hydrocarbure halogéné.

5. Gobelet selon l'une des revendications 1, 2 ou 3, dans lequel ledit moyen de filtre (41) comprend du poly(tétrafluoroéthylène) poreux.

6. Gobelet selon l'une des revendications 4 ou 5, dans lequel la dimension de pore dudit moyen de filtre (41) va d'environ 5 à 15 microns.

7. Gobelet selon l'une des revendications précédentes, dans lequel ledit moyen de contrôle du niveau de liquide comprend un moyen (33) de communication de trop-plein, communiquant avec ledit gobelet (32), et une chambre de trop-plein (35) pour maintenir le niveau de liquide dans le gobelet à une hauteur ou à un niveau prédéterminé, déterminé par la hauteur dudit moyen (33) de communication de trop-plein.

8. Gobelet selon l'une des revendications 5 ou 6, dans lequel le moyen de filtre (41) comprend un bouchon de poly(tétrafluoroéthylène) poreux.

9. Gobelet selon l'une des revendications précédentes, dans lequel le corps (30) du gobelet est fait d'une matière plastique transparente, de type acrylique.

## Ansprüche

1. Waschbehälter für einen Probennehmer, wobei die Probe in der Form einer ersten und einer zweiten Flüssigkeit vorliegt, von denen die erste Flüssigkeit im wesentlichen nicht mischfähig ist und ein wesentlich höheres spezifisches Gewicht als die zweite Flüssigkeit hat, wobei der Behälter mit einem Einlaßmittel (31) für die zweite Flüssigkeit und einem Auslaßmittel (37) versehen ist, das zum Abströmen zumindest von Teilen der ersten und der zweiten Flüssigkeit aus dem Behälter dient, **dadurch gekennzeichnet,** daß der Behälter zusätzlich enthält:

   ein Flüssigkeitsstandsteuermittel (33,35) zum Steuern des Flüssigkeitsstands in dem Behälter (32), das mit dem Behälter im wesentlichen unterhalb des Flüssigkeitsspiegels und mit dem Auslaßmittel (37) in Verbindung steht und

einem Mittel (41), das dem Boden des Behälters zugeordnet und das zu betätigen ist, um die Strömung der ersten Flüssigkeit aus dem Behälter (32) direkt zum Auslaßmittel (37) unter weitgehendem Ausschluß der zweiten Flüssigkeit zu gestatten.

2. Behälter nach Anspruch 1, bei dem das Flüssigkeitsstandsteuermittel (33,35) ein Überströmmittel (33) einschließt, das mit dem Behälter (32) in Verbindung steht, wobei der Flüssigkeitsspiegel im Behälter (32) durch die Überströmhöhe bestimmt ist.

3. Behälter nach Anspruch 1 oder 2, bei dem das zur Ermöglichung der Strömung der ersten Flüssigkeit zu betätigende Mittel ein poröses, fluidselektives Filtermittel (41), das zwischen dem Behälter (30) und dem Auslaßmittel (37) angeordnet und in der Lage ist, von der ersten Flüssigkeit unter weitgehendem Ausschluß der zweiten Flüssigkeit durchströmt zu werden.

4. Behälter nach Anspruch 1, 2 oder 3, bei dem das Filtermittel (41) ein poröses halogenisiertes Kohlenwasserstoffpolymer enthält.

5. Behälter nach Anspruch 1, 2 oder 3, bei dem das Filtermittel (41) ein poröses Polytetrafluoroäthylen enthält.

6. Behälter nach Anspruch 4 oder 5, bei dem die Porengröße des Filtermittels (41) im Bereich von 5-15 $\mu$m liegt.

7. Behälter nach einem der vorhergehenden Ansprüche, bei dem das Flüssigkeitsstandsteuermittel ein mit dem Behälter in Verbindung stehendes Überströmverbindungsmittel (33) und eine Überströmkammer (35) enthält, um den Flüssigkeitsspiegel in dem Behälter in einer vorbestimmten Höhe oder einem vorbestimmten Niveau zu halten, die bzw. das von der Höhe des Überströmverbindungsmittels (33) bestimmt ist.

8. Behälter nach Anspruch 5 oder 6, bei dem das Filtermittel (41) einen Block aus porösem Polytetrafluoroäthylen einschließt.

9. Behälter nach einem der vorstehenden Ansprüche, bei dem das Behältergehäuse (30) aus klarem Plastikmaterial, wie Acryl, besteht.

# FIG.1
### PRIOR ART

# FIG.2
### PRIOR ART

FIG.3

FIG.4